# EUROPEAN PATENT APPLICATION

(11) **EP 2 028 062 A2**
(43) Date of publication of application: **25.02.2009**
(21) Application number: 08161492.7
(22) Date of filing: 30.07.2008
(51) Int. Cl.: B60R 16/037

(54) **System and method for optimizing speech recognition in a vehicle**

(30) Priority: 23.08.2007 US 895280
(71) Applicant: Delphi Technologies, Inc., Troy, Michigan 48007 (US)
(72) Inventor: Coon, Bradley S., Russiaville, IN 46979 (US); McDanell, Roger A., Carmel, IN 46033 (US)
(74) Representative: Denton, Michael John

(57) **Abstract**

A system (20) is provided for controlling personalized settings in a vehicle (10). The system (20) includes a microphone (22) for receiving spoken commands from a person (16A) in the vehicle (10), a location recognizer (80) for identifying location of the speaker (16A), and an identity recognizer (84) for identifying the identity of the speaker (16A). The system (20) also includes a speech recognizer (82) for recognizing the received spoken commands. The system (20) further includes a controller (24) for processing the identified location, identity and commands of the speaker (16A). The controller (24) controls one or more feature settings based on the identified location, identified identity and recognized spoken commands of the speaker (16A). The system (20) also optimizes the grammar comparison for speech recognition and the beamforming microphone array used in the vehicle (10).

## Description

### Technical Field

The present invention generally relates to control of vehicle settings and, more particularly, relates to control of feature settings in a vehicle based on user location and identification.

### Background of the Invention

Automotive vehicles are increasingly being equipped with user interfaceable systems or devices that may offer different feature settings for different users. For example, a driver information center may be integrated with a vehicle entertainment system to provide information to the driver and other passengers in the vehicle. The system may include navigation information, radio, DVD and other audio and video information for both front and rear seat passengers. In addition, the heating, ventilation, and air conditioning (HVAC) system may be controlled in various zones of the vehicle to provide for temperature control within each zone. These and other vehicle systems offer personalized feature settings that may be selected by a given user for a particular location on board the vehicle.

To interface with the various systems on board the vehicle, a human machine interface (HMI) in the form of a microphone and speech recognition system may be employed to receive and recognize spoken commands. A single global speech recognition system is typically employed to recognize the speech grammars which may be employed to control feature functions in various zones of the vehicle. In many vehicles, the speech recognition system focuses on a single user for voice control of automotive vehicle related features. In some vehicles, multiple microphones or steerable arrays may be employed to allow multiple users to control feature functions on board the vehicle. However, conventional speech recognizers that accommodate multiple users employed on vehicles typically require manual entry of some information including the identity and location of a particular user.

It is therefore desirable to provide for a vehicle system and method that offers enhanced user interface with one or more systems or devices on board a vehicle to control feature settings.

### Summary of the Invention

According to one aspect of the present invention, a system is provided for optimizing speech recognition in a vehicle. The system includes a microphone located in a vehicle for receiving input speech commands, a speech recognizer for recognizing the received speech commands, and a speech recognition grammar database comprising a plurality of grammars relating to known commands. The system also includes an occupant detector for detecting the location of a passenger in a zone of the vehicle. The system further includes a controller for processing the input speech commands to identify the speech commands based on a comparison with the stored grammars in the grammar database, wherein the controller controls the amount of stored grammars that are processed based on the detected location of the passenger in the vehicle.

According to another aspect of the present invention, a method of optimizing speech recognition in a vehicle is provided. The method includes the steps of receiving voice commands from a passenger via a microphone in a vehicle, and providing a speech recognition grammar database comprising a plurality of stored grammars relating to known commands. The method further includes the steps of recognizing the speech commands by comparing stored grammars to the received speech commands, and detecting a passenger in a zone of the vehicle. The method further includes the steps of controlling the amount of stored grammars that are compared based upon the passenger detection.

According to yet another aspect of the present invention, a system for controlling microphone reception in a vehicle is provided. The system includes a microphone array located in the vehicle and providing an adjustable microphone beam, and a beamforming routine for controlling the adjustable microphone beam provided by the microphone array. The system also includes an occupant location detector is located in the vehicle for detecting location of one or more passengers in the vehicle. The system further includes a controller for controlling the beamforming routine based on the detected passenger location such that the beam focuses on the detected location where one or more detected passengers are located.

According to a further aspect of the present invention, a method for controlling a microphone beam in a vehicle is provided. The method includes the steps of providing a microphone array providing an adjustable microphone beam, receiving speech commands from a passenger via a microphone array, and providing a beamforming routine to adjust the microphone beam of the microphone array to select a beam pattern. The method also includes the step of detecting the location of one or more passengers in the vehicle. The method further includes the step of controlling the beamforming routine based on the detected location of one or more passengers, such that the beam focuses on locations where one or more occupants are located in the vehicle.

These and other features, advantages and objects of the present invention will be further understood and appreciated by those skilled in the art by reference to the following specification, claims and appended drawings.

### Brief Description of the Drawings

The present invention will now be described, by way of example, with reference to the accompanying drawings, in which:
FIG. 1 is a top view of a vehicle equipped with a zone-based voice control system employing a microphone array according to one embodiment of the present invention;
FIGS. 2A-2D are top views of the vehicle further illustrating examples of user spoken command inputs to the zone-based voice control system;
FIG. 3 is a block diagram illustrating the zone-based voice control system, according to one embodiment of the present invention;
FIG. 4 is a flow diagram illustrating a discovery mode routine for controlling the microphone beam pattern based on occupant position, according to one embodiment; and
FIG. 5 is a flow diagram illustrating an active mode zone-based control routine for controlling personalized feature settings, according to one embodiment.

### Description of the Preferred Embodiment

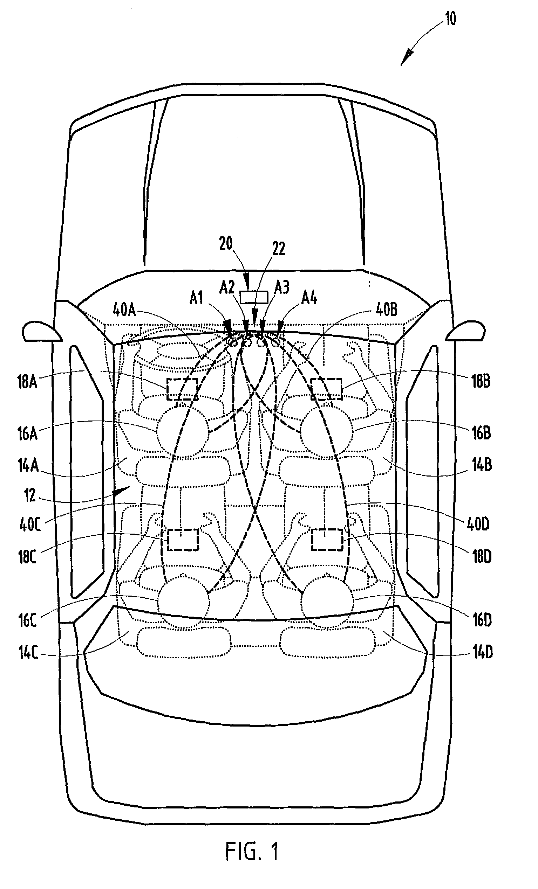

Referring to FIG. 1, a passenger compartment 12 of a vehicle 10 is generally illustrated equipped with a zone-based voice control system 20 for controlling various feature settings on board the vehicle 10. The vehicle 10 is shown and described herein according to one embodiment as an automotive wheeled vehicle having a passenger compartment 12 generally configured to accommodate one or more passengers. However, it should be appreciated that the control system 20 may be employed on board any vehicle having a passenger compartment 12.

The vehicle 10 is shown having a plurality of occupant seats 14A-14D located within various zones of the passenger compartment 12. The seating arrangement may include a conventional seating arrangement with a driver seat 14A to accommodate a driver 16A of the vehicle 10 who has access to vehicle driving controls, such as a steering wheel and vehicle pedal controls including brake and gas pedals. Additionally, the other occupant seats 14B-14D may seat other passengers located on board the vehicle 10 who are not driving the vehicle 10. Included in the disclosed embodiment is a non-driving front passenger 16B and two rear passengers 16C and 16D located in seats 14B-14D, respectively.

Each passenger, including the driver, is generally located at a different dedicated location or zone within the passenger compartment 12 and may access and operate one or more systems or devices with personalized feature settings. For example, the driver 16A may select personalized settings related to the radio/entertainment system, the navigation system, the adjustable seat position, the adjustable steering wheel and pedal positions, the mirror settings, HVAC settings, cell phone settings, and various other systems and devices. The other passengers 16B-16D may also have access to systems and devices that may utilize personalized feature settings, such as radio/entertainment settings, DVD settings, cell phone settings, adjustable seat position settings, HVAC settings, and other electronic system and device feature settings. The rear seat passengers 16C and 16D may have access to a rear entertainment system, which may be different from the entertainment system made available to the front passengers. In order to control one or more feature settings, each passenger within the vehicle 10 may interface with the systems or devices by way of the zone based control system 20 of the present invention.

The vehicle 10 is shown equipped with a microphone 22 for receiving audio sound including spoken commands from the passengers in the vehicle 10. In the one embodiment, the microphone 22 includes an array of microphone elements A1-A4 generally located in the passenger compartment 12 so as to receive sounds from controllable or selectable microphone beam zones. According to one embodiment, the array of microphone elements A1-A4 is located in the vehicle roof generally forward of the front seat passengers so as to be in position to be capable of receiving voice commands from all passengers in the passenger compartment 12. The microphone array 22 receives audible voice commands from one or more passengers on board the vehicle 10 and the received voice commands are processed as inputs to the control system 20.

The microphone array 22 in combination with beamforming software determines the location of a particular person speaking within the passenger compartment 12 of the vehicle 10, according to one embodiment. Additionally, speaker identification software is used to determine the identity of the person in the vehicle 10 that is speaking, which may be selected from a pool of enrolled users stored in memory. The spoken words are forwarded to voice recognition software which identifies or recognizes the speech commands. Based on the identified speaker location, identity and speech commands, personalized feature settings can be applied to systems and devices to accommodate passengers in each zone of the vehicle 10. It should be appreciated that the personalization feature selections of the present invention may be achieved in an "always listening" fashion during normal conversation. For example, personal radio presets for the dual-zone rear seat entertainment system, temperature settings for each zone of the HVAC system, personal voice aliases for various functions, such as speed dials on cell phones, may be controlled by entering voice inputs that are received by the microphone 22 and are used to identify the identity of the speaker, so as to provide personalized settings that accommodate that specific speaker.

It should be appreciated that the pool of enrolled users may be enrolled automatically in the "always listening" mode or in an off-line enrollment process which may be implemented automatically. Additionally, a passenger in the vehicle may be identified by the inputting of the passenger's name which can make use of differentiation for security and personalization. For example, a passenger may announce by name that he is the driver of the vehicle, such that optimized voice models and personalization preferences, etc. may be employed.

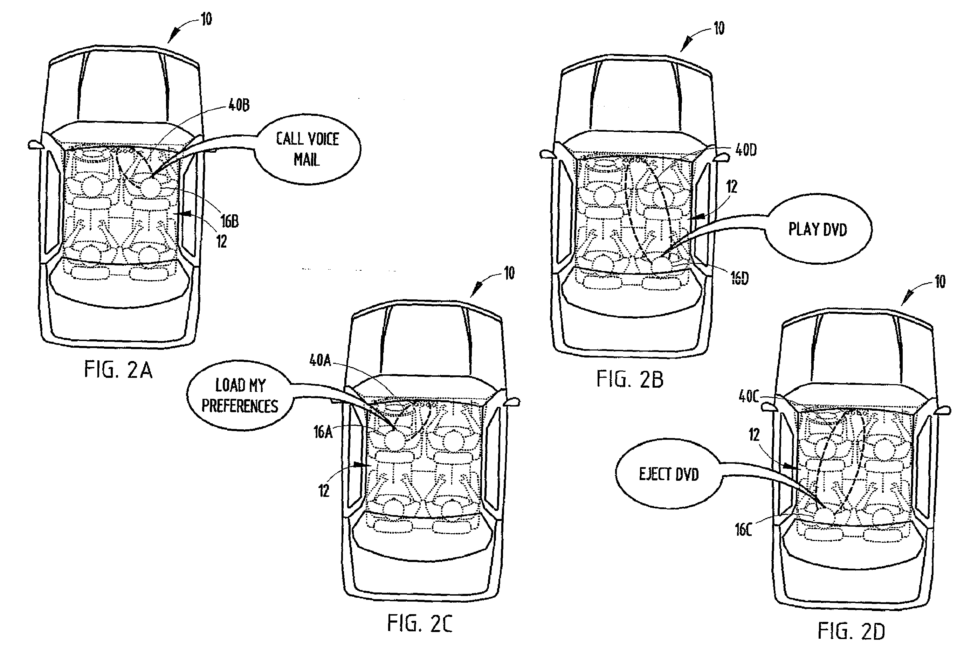

Referring to FIGS. 2A-2D, examples of spoken user commands by each of the four passengers in vehicle 10 are illustrated. In FIG. 2A, passenger 16B provides an audible voice command to "Call Voice Mail," which is picked up by the microphone array 22 from within the passenger zone 40B. In FIG. 2B, rear seat passenger 16D provides a spoken audible command to "Play DVD," which voice command is received by the microphone array 40 within passenger zone 40D. In FIG. 2C, the vehicle driver 16A provides an audible voice command to "Load My Preferences" which is received by microphone array 22 within voice zone 40A. In FIG. 2D, rear seat passenger 16C provides an audible voice command to "Eject DVD" which is received by microphone array 22 within passenger zone 40C. In each of the aforementioned examples, the speaking passenger provides audible input commands that are unique to that passenger to select personalized settings related to one or more feature settings of a system or device relating to the speaker and the corresponding zone in which the speaker is located. Each passenger is located in a different zone within the passenger compartment 12, such that the microphone array 22 picks up voice commands from the zone that the speaker is located within and determines the location and identity of the speaker, in addition to recognizing the spoken commands from that specific speaker.

During a speech recognition cycle, the location and identification of a passenger speaking allows a single recognizer system to be used to control functions in that particular zone of the vehicle 10. For example, given a dual rear seat entertainment system, each user can use the same recognizer system to control his or her system or device without requiring a separate identification of his or her location. That is, one user can command "Play DVD" and the other user can command "Eject DVD" and each user's DVD player will react accordingly without the user having to separately identify which DVD is to be controlled. Similarly, users in each zone of the vehicle 10 can set the temperature of the HVAC system by speaking a command, such as "Temperature 72." The recognizer system will know, based on each user's location and identification, for what zone the temperature is to be adjusted. The user does not need to separately identify what zone is to being controlled. As a further example, a user may speak a voice speed dial, such as "Call Mary Smith." Based on the user's identity as determined by the speaker identification software and assigned to that user's location, the recognizer system will select and call the phone number from the correct user's personalized list.

In addition to or as an alternative to the microphone array 22, it should be appreciated that individual microphones and/or push-to-active switches may be employed, according to other embodiments. The switches may be assigned to each user's position in the vehicle. However, the use of switches may complicate the vehicle integration and add to the cost.

In addition to controlling personalization feature settings, the zone-based control system 20 processes vehicle sensor inputs, such as occupant detection and identification, vehicle speed and proximity to other vehicles, and optimizes grammars available to each passenger in the vehicle based on his or her location and identity and state of the vehicle. For example, vehicle sensor data may include vehicle speed, vehicle proximity data, occupant position and identification, and this information may be employed to optimize the available grammars that are available for each occupant under various conditions. For example, if only front seat passengers are present in the vehicle, speech or word grammars related to the control of the rear seat entertainment system may be excluded. Whereas, if only the rear seat passengers are present in the vehicle, then navigation system grammars may be excluded. If only the front seat passenger is present in the vehicle, then the driver information center grammars may be excluded. Likewise, personalized grammars for passengers that are absent can be excluded. By excluding grammars that are not applicable under certain vehicle state conditions, the available grammars that may be employed can be optimized to enhance the recognition accuracy and reduce burden on the computing platform for performing speech recognition.

Further, the zone-based control system 20 may optimally constrain the microphone array 22 for varying numbers and locations of passengers within the vehicle 10. Specifically, the microphone array 22 along with the beamforming software may be employed to focus on the location of the person speaking in the vehicle, and occupant detection may be used to constrain the beamforming software. If a seating position is known to be vacant, then the beamforming software may be constrained such that the seating location is ignored. Similarly, if only one seat is known to be occupied, then an optimal beam may be focused on that location with no additional steering or adaptation of the microphone required.

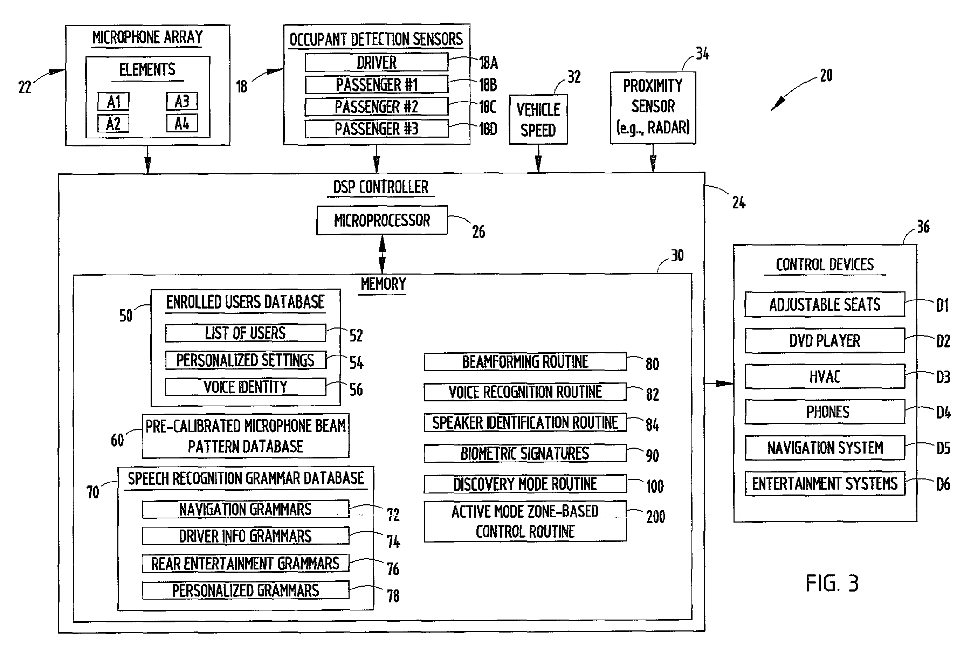

Referring to FIG. 3, the zone-based control system 20 is illustrated having a digital signal processor (DSP) controller 24. The DSP controller 24 receives inputs from the microphone array 22, as well as occupant detection sensors 18, a vehicle speed signal 32 and a proximity sensor 34, such as a radar sensor. The microphone array 22 forwards the signals received by each of microphone elements A1-A4 to the DSP controller 24. The occupant detection sensors 18 include sensors for detecting the presence of each of the occupants within the vehicle 10 including the driver detection sensor 18A, and passenger detection sensors 18B-18D. According to one example, the occupant detection sensors 18A-18D may each include a passive occupant detection sensor, such as a fluid bladder sensor located in a vehicle seat for detecting the presence of an occupant seated in a given seat of the vehicle. Other occupant detection sensors may be employed, such as infrared (IR) sensors, cameras, electronic-field sensors and other known sensing devices. The proximity sensor 34 senses proximity of the vehicle 10 to other vehicles. The proximity sensor 34 may include a radar sensor. The vehicle speed 32 may be sensed or determined using known vehicle speed measuring devices such as global positioning system (GPS), wheel sensors, transmission pulses or other known sensing devices.

The DSP controller 24 includes a microprocessor 26 and memory 30. Any microprocessor and memory capable of storing data, processing the data, executing routines and other functions described herein may be employed. The controller 24 processes the various inputs and provides control output signals to any of a number of control systems and devices (hereinafter referred to as control devices) 36. According to the embodiment shown, the control devices 36 may include adjustable seats D1, DVD players D2, HVAC system D3, phones (e.g., cell phones) D4, navigation system D5 and entertainment systems D6. It should be appreciated that feature settings of these and other control devices may be controlled by the DSP controller 24 based on the sensed inputs and routines as described herein.

The DSP controller 24 includes various routines and databases stored in memory 30 and executable by microprocessor 26. Included is an enrolled users database 50 which includes a pool (list) of enrolled users 52 along with their personalized feature settings 54 and voice identity 56. Also included is a pre-calibrated microphone beam pattern database 60 that stores preset microphone beam patterns for receiving sounds from various zones. Further included is a speech recognition grammar database 70 that includes various grammar words related to navigation grammars 72, driver information grammars 74, rear entertainment grammars 76, and personalized grammars 78, in addition to other grammars that may be related to other devices on board the vehicle 10. It should be appreciated that speech recognition grammar databases employing speech word grammars for recognizing speech commands for various functions are known and available to those skilled in the art.

The zone-based control system 20 includes a beamforming routine 80 stored in memory 30 and executed by microprocessor 26. The beamforming routine 80 processes the audible signals received from the microphone array 22 and determines the location of a particular speaker within the vehicle. For example, the beamforming routine 80 may identify a zone from which the spoken commands were received by processing amplitude and time delay of signals received by the various microphone elements A1-A4. The relative location of elements A1-A4 from the potential speakers results in amplitude variation and time delays, which are processed to determine the location of the source of the sound. The beamforming routine 80 also processes the pre-calibrated microphone beam pattern data to select an optimal beam to cover one or more desired zones. Beamforming routines are readily recognized and known to those skilled in the art for determining directivity from which sound is received.

Also stored in memory 30 and executed by microprocessor 26 are one or more voice recognition routines 82 for identifying the spoken voice commands. Voice recognition routines are well-known to those skilled in the art for recognizing spoken grammar words. Voice recognition routine 82 may include recognition routines that are trainable to identify words spoken by one or more specific users and may include personalized grammars.

Further stored in memory 30 and executed by microprocessor 26 are biometric signatures 90. The biometric signatures may be used to identify signatures assigned to each location within the vehicle which indicate the identity of the person at that location. During system usage, an appropriate microphone beam can be selected for the person speaking based on his or her location in the vehicle as determined by his or her biometric signature. Thus, each user in the vehicle may be assigned a biometric signature.

The zone-based control system 20 further includes a discovery mode routine 100 stored in memory 30 and executed by microprocessor 26. The discovery mode routine 100 is continually executed to detect location of passengers speaking and to monitor changes in speaker position and to determine which passenger seats are occupied. The discovery mode routine 100 identifies which user is seated in which position in the vehicle 50 such that the appropriate microphone beam pattern and grammars can be used during an active mode routine.

The zone-based control system 20 further includes an active mode zone-based control routine 200 stored in memory 30 and executed by microprocessor 26. The active mode zone-based control routine 200 processes the identity and location of a user speaking commands in addition to processing the recognized speech commands. Control routine 200 further controls personalization feature settings for one or more features on board the vehicle. Thus, the active mode routine 200 provides for the actual control of one or more devices by way of the voice input commands. The control routine 200 identifies the identity and location of the speaker within the vehicle, such that spoken command inputs that are identified may be applied to control personalization settings related to that passenger, particularly to those devices made available in that location of the vehicle.

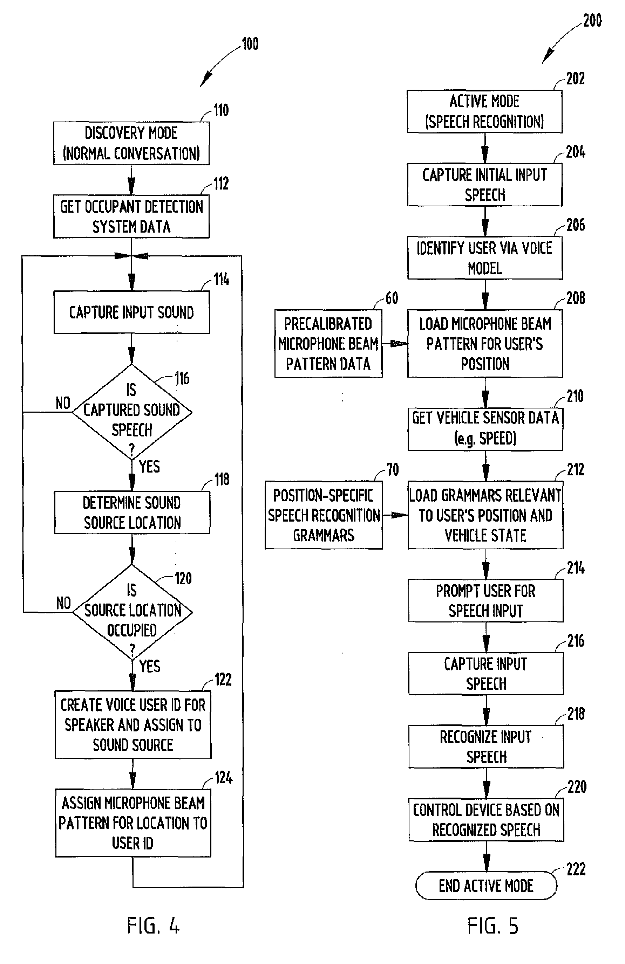

Referring to FIG. 4, the discovery mode routine 100 is illustrated, according to one embodiment. The discovery mode routine 100 begins at step 110 and proceeds to get the occupant detection system data in step 112. The occupant detection system data is used to ensure that the discovery mode routine 100 does not assign a user identification to a vacant location in the vehicle. Next, routine 100 proceeds to capture input sound at step 114. In decision step 116, routine 100 determines if the captured sound is identified as speech and, if not, returns to step 114. If the captured sound is identified as speech, discovery mode routine 100 proceeds to determine the location of the sound source in step 118. In decision step 120, routine 100 determines if the sound source location is occupied and, if not, returns to step 114. If the determined sound source location is occupied, routine 100 proceeds to step 122 to create a voice user identification for the speaker and assigns it to the sound source location. Finally, at step 124, routine 100 assigns a microphone beam pattern for the location to the user identified, before returning to step 114.

The discovery mode routine 100 is continually repeated to continuously monitor for changes in the speaker position. As the passenger speaking changes, the location and identity of the speaker are determined to determine what user is seated in what position in the vehicle, so that the appropriate microphone beam pattern and grammars may be used during execution of the active mode routine 200.

The active mode routine 200 is illustrated in FIG. 5, according to one embodiment. Routine 200 begins at step 202 which may occur upon utterance of a spoken key word or other input such as a manually entered key press, and then proceeds to capture the initial input speech at step 204. Next, at step 206, routine 200 identifies the user via a voice model, such as the voice identity 56 provided in the enrolled user database 50. This may include comparing the voice of the input speech to known voice inputs stored in memory. Next, routine 200 loads the microphone beam pattern for the user's position in step 208. The microphone beam pattern is retrieved from the pre-calibrated microphone beam pattern database 60.

Routine 200 acquires the vehicle sensor data, such as vehicle speed, at step 210. Thereafter, routine 200 loads grammars that are relevant to the speaking user's position and the vehicle state in step 212. The grammars are retrieved from the position-specific speech recognition grammar database 70. It should be appreciated that the grammars stored in a position specific speech recognition grammars database 70 may categorize grammars and their availability as to certain passengers at certain locations in the vehicle and as to grammars available under certain vehicle state conditions. Next, at step 214, routine 200 prompts the speaking user for speech input. In step 216, input speech is captured and at step 218, the input speech is recognized by way of a known speech recognition routine. Following recognition of the speech input, routine 200 proceeds to control one or more systems or devices based on the recognized speech in step 220. This may include controlling one or more feature settings of one or more of systems or devices on board the vehicle based on spoken user identity, location and speech commands. Finally, routine 200 ends at step 222.

It should be appreciated that routine 200 optimizes the spoken grammar recognition by processing the identity and location of passengers in the vehicle and optimizes the grammar recognition based on which devices are currently available to that user. If a particular device is not available to a user in a particular location due to the identity or location of the passenger, the stored grammars that are available for comparison with the spoken words are intentionally limited, such that reduced computational complexity is achieved by limiting the compared grammars to those relevant to the person speaking, so as to increase recognition accuracy and to increase system response time. Thus, grammars irrelevant to a given passenger position and certain driving conditions may be eliminated from the comparison procedure.

In addition, vehicle sensor data may be used to optimize the speech recognition grammars available to each person in the vehicle. According to one embodiment, one or more of vehicle speed, detected occupant position and identification, and proximity of the vehicle to other vehicles, may be employed to optimize the grammars made available for each occupant under various conditions. For example, if only front seat passengers are detected in the vehicle, stored grammars related to the control of rear seat features may be excluded from speech recognition processing. Contrarily, if only rear passengers are present, then grammars relevant only to the front seat passengers may be excluded. Likewise, personalized grammars for passengers that are absent from the vehicle may be excluded. Some features, such as navigation destination entry, may be locked out while the vehicle is in motion and, as such, these grammars may be made unavailable to the driver while the vehicle is in motion, but may be made available to other passengers in the vehicle. It should further be appreciated that other features may be made unavailable to the driver in congested traffic.

It should further be appreciated that routine 200 optimizes the beamforming routine to optimize the microphone beam patterns. By knowing where occupants are seated within the vehicle, the beamforming routine can be constrained. For example, if a seating position is known to be vacant, then the beamforming routine can be constrained such that the seating location is ignored. If only one seat is known to be occupied, then an optimal microphone beam pattern may be focused on that location with no further beam steering or adaptation required. Thus, the microphone beam patterns are optimized to reduce computational complexity and to avoid the need for fully adaptable beam patterns and steering. The microphone beam patterns may include a plurality of predetermined beam patterns stored in memory and selectable to provide the optimal beam coverage.

The speaker identification routine is employed to determine what individual is in what location in the vehicle. If a visual occupant detection system is employed in the vehicle, then user locations may be identified via face recognition software. Other forms of occupant detection systems may be employed. Voice-based speaker identification software may be used to differentiate users in different locations within the vehicle during normal conversation. The software may assign a biometric signature to each location (zone) within the vehicle. During system usage, the beamforming system can then select an appropriate microphone beam for the person speaking based on his or her location in the vehicle as determined by his or her biometric signature. The control system 20 selects from a set of predefined beam patterns. That is, when a person is speaking from a given location, the control system 20 selects the appropriate beam pattern for that location. However, the control system 20 may also adapt the stored beam pattern to account for variations in seat position, occupant height, etc.

Accordingly, the zone-based control system 20 of the present invention advantageously provides for enhanced control of vehicle settings within a vehicle 10 by allowing for easy access to controllable device settings based on user location, identity and speech commands. The control system 20 advantageously minimizes a number of input devices and commands that are required to control a device feature setting. Additionally, the control system 20 optimizes the use of grammars and the beamforming microphone array used in the vehicle 10.

It will be understood by those who practice the invention and those skilled in the art, that various modifications and improvements may be made to the invention without departing from the spirit of the disclosed concept. The scope of protection afforded is to be determined by the claims and by the breadth of interpretation allowed by law.

## Claims

1. A system (20) for optimizing speech recognition in a vehicle (10), said system (20) comprising:
a microphone (22) located in a vehicle (10) for receiving input speech commands from a passenger (16A);
a speech recognizer (82) for recognizing the received speech commands;
a speech recognition grammar database (70) comprising a plurality of stored grammars (72-78) relating to known commands;
an occupant detector (18) for detecting location of one or more passengers in a zone of the vehicle (10); and
a controller (24) for processing the input speech commands to identify the received speech commands based on a comparison with the stored grammars (72-78) in the grammar database (70), wherein the controller (24) controls the amount of stored grammars that are processed based on the detected location of the one or more passengers in the vehicle (10).

2. The system as defined in claim 1, wherein the controller (24) further controls the amount of stored grammars that are compared based on device featuress available to the detected one or more passengers.

3. The system as defined in claim 1, wherein the controller (24) excludes one or more stored grammars from comparison with the received speech commands when the excluded one or more stored grammars do not relate to the detected one or more passengers or the location of the one or more passengers.

4. The system as defined in claim 1, wherein the controller excludes stored grammars from processing that relate to rear seat passengers in a vehicle (10) when the input speech commands relate to a front seat passenger.

5. The system as defined in claim 1, wherein the controller (24) excludes from processing personal stored grammars that relate to passengers that are not detected within the vehicle (10).

6. The system as defined in claim 1, wherein the microphone (22) comprises an array of receiving elements (A1-A4), and wherein the occupant detector (18) detects a location of the passenger (16A) based on speech received by the array of receiving elements (A1-A4).

7. The system as defined in claim 1, wherein the occupant detector (18) distinguishes the passenger (16A) as a driver of the vehicle (10) from a non-driver passenger in the vehicle (10).

8. The system as defined in claim 1 further comprising an identity recognizer (84) for identifying the identity of a passenger (16A) based on received speech.

9. The system as defined in claim 1, wherein the speech recognizer (82) comprises voice recognition software.

10. The system as defined in claim 1 further comprising one or more sensors (32, 34) for sensing vehicle sensor data, wherein the controller controls the amount of stored grammars that are processed further based on the vehicle sensor data.

11. The system as defined in claim 10, wherein the vehicle sensor data comprises at least one of vehicle speed (32) and vehicle proximity data (34).

12. A method (200) of optimizing speech recognition in a vehicle (10) comprising the steps of:
receiving (204) speech commands from a passenger (16A) via a microphone (22) in a vehicle (10);
providing (70) a speech recognition grammar database comprising a plurality of stored grammars (72-78) relating to known commands;
recognizing (218) the received speech commands by comparing stored grammars to the received speech commands;
detecting (112) the location of one or more passengers in a zone of the vehicle (10); and
controlling (212) the amount of stored grammars that are compared based upon the detected location of the one or more passengers.

13. The method as defined in claim 12, wherein the step of controlling (212) the amount of stored grammars that are compared comprises controlling the amount of stored grammars based upon device features available to the detected one or more passengers.

14. The method as defined in claim 12, wherein the step of controlling (212) comprises excluding one or more stored grammars from comparison with the received speech commands when the excluded one or more stored grammars do not relate to the detected one or more passengers or location of the one or more passengers.

15. The method as defined in claim 12, wherein the step of controlling (212) further comprises excluding from comparison stored grammars that relate to rear seat passengers in the vehicle (10) when the input speech commands relate to a front seat passenger.

16. The method as defined in claim 12, wherein the step of controlling (212) further comprises excluding from comparison personal stored grammars that relate to passengers that are not detected within the vehicle (10).

17. The method as defined in claim 12, wherein the step of receiving (204) input speech commands comprises receiving input speech via an array of receiving elements (A1-A4), and wherein the location of a passenger is determined based upon the received input speech.

18. The method as defined in claim 12 further comprising the step of identifying (206) the identity of the speaking passenger based upon the received speech.

19. The method as defined in claim 12 further comprising the step of sensing (210) vehicle sensor data, wherein the step of controlling (212) further comprises controlling the amount of stored grammars that are compared based further upon the vehicle sensor data.

20. The method as defined in claim 19, wherein the step of sensing (21) vehicle sensor data comprises sensing at least one of vehicle speed and vehicle proximity data.

21. A system (20) for controlling microphone reception in a vehicle (10), said system (20) comprising:
a microphone array (22) located in a vehicle (10) and providing an adjustable microphone beam;
a beamforming routine (80) for controlling the adjustable microphone beam provided by the microphone array (22);
occupant location detector (18) located in the vehicle (10) for detecting location of one or more passengers in the vehicle (10); and
a controller (24) for controlling the beamforming routine (80) based on the detected location of more passengers such that the beam focuses on the detected location where one or more detected passengers are located.

22. The system as defined in claim 21 further comprising a speaker identification routine (84) to identify a passenger speaking in the vehicle (10), wherein the controller (24) further controls the beamforming routine (80) as a function of the identified passenger.

23. The system as defined in claim 22, wherein the controller (24) assigns a biometric signature (90) to each location where a passenger is detected.

24. The system as defined in claim 21, wherein the microphone beam is selectable from a plurality of predefined microphone beam patterns.

25. A method (200) for controlling a microphone beam in a vehicle (10), said method comprising the steps of:
providing a microphone array providing an adjustable microphone beam;
receiving (204) voice commands from a passenger via a microphone array;
providing (60) a beamforming routine to adjust the microphone beam of the microphone array (22) to select a beam pattern;
detecting (118) location of one or more passengers in the vehicle;
controlling (208) the beamforming routine based on the detected passenger location, such that the beam focuses on a location where one or more occupants are located in the vehicle.

26. The method as defined in claim 25 further comprising the step of identifying (206) a passenger speaking in the vehicle (10) by processing a speaker identification routine (84).

27. The method as defined in claim 25 further comprising the step of assigning a biometric signature (90) to each location where a passenger is detected.

28. The method as defined in claim 25, wherein the step of controlling (208) the beamforming routine comprises selecting one from a plurality of predefined microphone beam patterns.
